Europäisches Patentamt

European Patent Office

Office européen des brevets

(19)

(11) Numéro de publication : **0 081 407 B1**

# FASCICULE DE BREVET EUROPÉEN

(12)

(45) Date de publication du fascicule du brevet :
**10.09.86**

(21) Numéro de dépôt : **82402102.6**

(22) Date de dépôt : **17.11.82**

(51) Int. Cl.⁴ : **C 08 F 2/34, B 01 J 8/10,
C 08 F 10/00**

(54) **Procédé de polymérisation en phase gazeuse faisant appel à la catalyse hétérogène et réacteur sphérique pour sa mise en oeuvre.**

(30) Priorité : **30.11.81 FR 8122425**

(43) Date de publication de la demande :
**15.06.83 Bulletin 83/24**

(45) Mention de la délivrance du brevet :
**10.09.86 Bulletin 86/37**

(84) Etats contractants désignés :
**AT BE DE GB IT NL SE**

(56) Documents cités :
**DE-A- 1 745 444
DE-A- 1 745 456**

(73) Titulaire : **ATO CHIMIE
La Défense 5 12/16 Allée des Vosges
F-92400 Courbevoie (FR)**

(72) Inventeur : **Brun, Claude
5, clos St Pierre
F-64320 Idron Bizanos (FR)**
Inventeur : **Pelletier, Robert
125, avenue Jean Mermoz
F-64110 Billere (FR)**

(74) Mandataire : **Phélip, Bruno et al
c/o Cabinet Harlé & Phélip 21, rue de la Rochefoucauld
F-75009 Paris (FR)**

**0 081 407**

**Description**

L'invention concerne le domaine de la polymérisation en phase gazeuse faisant appel à la catalyse hétérogène. Elle a plus particulièrement pour objet un procédé et un réacteur permettant la mise en œuvre de telles réactions de polymérisation.

De nombreux monomères sont aptes à une polymérisation en phase gazeuse avec catalyse hétérogène. C'est notamment le cas des hydrocarbures à insaturation éthylénique, en particulier des oléfines. Pour des réactions d'homopolymérisation aussi bien que de copolymérisation, le monomère est mis en contact sous forme gazeuse avec un catalyseur dispersé sous forme solide, de sorte que la catalyse est hétérogène.

Lors de la polymérisation, le polymère se forme autour des grains de catalyseur, et si l'on opère à une température inférieure au point de fusion du polymère, on obtient finalement une poudre de polymère. La dimension granulométrique moyenne de la poudre de polymère obtenue est en général supérieure à celle de la poudre de catalyseur.

Les polymérisations en phase gazeuse sont principalement effectuées dans des réacteurs à lit fluide ou à lit agité.

Les appareillages mettant en œuvre des lits fluides ne sont pas exempts d'inconvénients. On sait en effet que la fluidisation des poudres est une opération délicate qui requiert des distributions de granulométrie précises. Les fines ont tendance à être entraînées hors du lit, alors que les plus grosses particules ont tendance à se déposer sur la grille de distribution de gaz du réacteur. Les conditions de débit de gaz pour la fluidisation et l'échange thermique à l'intérieur des réacteurs sont intimement liées de sorte que la marche de ceux-ci n'est pas souple. Dans tous les cas, la vitesse de circulation des gaz doit être égale ou supérieure à la vitesse minimale de fluidisation. Par ailleurs, la mise en route d'un réacteur à lit fluide nécessite le chargement préalable du réacteur avec une certaine quantité de matériau en particules, essentiellement de la poudre de polymère. Sans une telle charge préalable, il n'y a pas assez de poudre de catalyseur pour créer le lit fluidisé.

Des appareils classiques pour la mise en œuvre de réactions de polymérisation en catalyse hétérogène sont des réacteurs à lit agité. Ces types de réacteurs peuvent revêtir plusieurs formes. Bon nombre d'entre eux sont verticaux : il s'agit par exemple de cylindres à fond arrondi munis d'agitateur. On trouve aussi des réacteurs horizontaux. Dans tous les cas, il faut avoir recours à une charge initiale de poudre de polymère. Il est difficile d'obtenir une agitation bien homogène au sein du réacteur, de sorte que les risques d'agglomération de poudre de polymère en croissance dans des zones mal agitées sont accrus. Le système agitateur comprend des pales et des contre-pales, ce qui crée des zones mortes. L'agitation obtenue n'est pas uniforme et homogène.

Ce problème est particulièrement net lorsqu'on effectue des réactions de prépolymérisation dans le but de régler les granulométries des poudres en croissance et de contrôler les activités initiales extrêmement élevées de certains types de catalyseurs. Avec les réacteurs à lit fluide et à lit agité classiques, on se heurte à la formation de points chauds et d'agglomérats dans les zones mortes ou mal agitées, ce qui rend le produit hétérogène et impropre à l'utilisation dans un réacteur de polymérisation principal.

L'invention a pour objet un procédé de polymérisation amélioré en phase gazeuse et catalyse hétérogène, dans un réacteur de polymérisation remédiant aux inconvénients des techniques de l'art antérieur, qu'elles fassent appel à un lit fluide ou à un lit agité. Au sens de la présente invention et dans la description qui suit, on entend par polymérisation tous les degrés d'avancement de la réaction de polymérisation permettant d'obtenir une poudre sèche couvrant des plages de granulométrie très larges. Ainsi le procédé de polymérisation décrit peut servir à former un prépolymère injectable dans un second réacteur de polymérisation. En particulier ce réacteur de polymérisation peut être en phase gazeuse du même type (lit agité) ou d'un autre type (lit fluide par exemple). Le procédé de polymérisation décrit peut également servir à former directement le polymère définitif sous forme pulvérulente, homogène et sans agglomérats.

Selon l'invention, l'agitation est parfaitement homogène et ne laisse pas subsister de zones mortes, ce qui permet d'obtenir une excellente dispersion du catalyseur, de la poudre de polymère en croissance et des gaz du réacteur. L'invention permet également de s'affranchir pratiquement de la dimension granulométrique des catalyseurs et poudre de polymère, et, par conséquent, de pouvoir mettre en œuvre une gamme beaucoup plus large de catalyseurs solides. L'invention permet d'effectuer le démarrage de la polymérisation avec une charge initiale de poudre très réduite ou même nulle si nécessaire.

Sous sa forme la plus générale, l'invention a pour objet un procédé de polymérisation en phase gazeuse faisant appel à la catalyse hétérogène par mise en contact d'au moins un monomère oléfinique, gazeux dans les conditions de réaction, avec un catalyseur solide, dans une zone de polymérisation agitée, ledit procédé étant caractérisé en ce qu'on utilise une zone de polymérisation délimitée par une paroi sphérique et en ce qu'on réalise l'agitation à l'aide d'un ensemble-turbine à pales, entraîné en rotation, lesdites pales affleurant ladite paroi sur 10 à 60 % de sa surface, les particules de catalyseur ainsi que la poudre de polymère en croissance étant entraînées par la force centrifuge sur au moins une partie de la paroi sphérique et retombant dans la partie centrale de la zone sphérique, en assurant ainsi un brassage énergique et uniforme et sans zones mortes.

2

L'invention est applicable essentiellement à des polymérisations en phase gazeuse faisant appel à la catalyse hétérogène. Cette définition implique que l'on peut utiliser une grande variété de monomères oléfiniques capables d'être mis sous forme gazeuse dans les conditions de polymérisation régnant à l'intérieur du réacteur. On peut également introduire des monomères liquéfiables en les injectant sous pression dans la zone de polymérisation. Dans cette dernière, les monomères liquéfiables se vaporisent, de sorte que le monomère ou le comonomère se trouve en phase gazeuse lors de la réaction de polymérisation. L'atmosphère gazeuse du réacteur pourra éventuellement contenir des gaz inertes vis-à-vis de la réaction de polymérisation et des gaz agissant sur les réactions de transfert. On utilise de fortes proportions d'inertes avec de faibles pressions partielles de monomère(s), en particulier lorsque le réacteur fonctionne en prépolymérisation, ceci afin de bien contrôler les vitesses initiales des catalyseurs et les échanges thermiques.

La forme de la zone sphérique de polymérisation mise en œuvre selon l'invention permet de travailler dans une large gamme de pressions et de température. On peut travailler aussi bien sous vide que sous pression élevée. Des gammes de pression utilisables s'étendent depuis des valeurs inférieures à la pression atmosphérique jusqu'à $506\,625 \cdot 10^2$ Pa (500 atmosphères) ou davantage, la gamme préférée se situant entre $101\,325$ et $8\,106 \cdot 10^3$ Pa (1 à 80 atmosphères) environ. Bien entendu, les conditions particulières à choisir dépendront de la nature du ou des monomères à polymériser.

Les conditions de température ne sont pas non plus critiques. On peut travailler aussi bien en dessous de la température ordinaire qu'au-dessus. En général la gamme de températures convenables s'étend de la température normale à 250 °C ou davantage et, de préférence, se situe entre la température ordinaire et 150 °C environ. Là encore, c'est la nature du ou des monomère(s) à polymériser et du polymère obtenu qui permettra à l'homme de l'art de choisir les conditions de température particulières les plus appropriées, le procédé de l'invention pouvant être mis en œuvre à toutes les températures usuelles des réactions de polymérisation en phase gazeuse avec catalyse hétérogène.

Les monomères utilisés pour la polymérisation selon l'invention sont des hydrocarbures à insaturation éthylénique. Le nouveau procédé permet en particulier la polymérisation d'oléfines et la copolymérisation d'oléfines entre elles pour obtenir des polyoléfines de densité et structure variables. Outre l'éthylène et le propylène, qui représentent des monomères particulièrement préférés, on peut utiliser diverses α-oléfines comportant de préférence 3 à 18 atomes de carbone et mieux 3 à 6 atomes de carbone, y compris le butène-1, le pentène-1, le méthyl-4-pentène-1, l'heptène-1, l'hexène-1, l'octène-1, et leurs mélanges. Les réactions de copolymérisation que l'on préfère sont celles qui font appel à la copolymérisation d'éthylène et de propylène, ainsi qu'à la copolymérisation de l'éthylène et/ou des oléfines de 3 à 18 atomes de carbone, pouvant être à chaîne droite ou ramifiée. A titre d'exemples, on peut citer le butène-1, le pentène-1, l'hexène-1, le méthyl-4-pentène-1, l'heptène-1, l'octène-1, le nonène-1, le décène-1, l'undécène-1, le dodécène-1, le tridécène-1, le tétradécène-1, le pentadécène-1, l'hexadécène-1, l'heptadécène-1, l'octadécène-1 et leurs mélanges. Au sens de la présente description, l'expression « oléfines » couvre également les dioléfines et dioléfines conjuguées. Les diènes, tels que le butadiène, l'isoprène, l'hexadiène-1,4-l'hexadiène-1,5, le vinylnorbornène, l'éthylidènenorbornène et le dicyclopentadiène peuvent être avantageusement mis en œuvre comme co-monomères et spécialement comme termonomères dans une réaction de polymérisation selon l'invention.

Les modes d'introduction du ou des monomère(s) à polymériser, dans la zone de polymérisation sphérique, dépendront de la forme sous laquelle ces monomères sont disponibles dans les conditions de température et de pression de stockage.

Il peut s'avérer intéressant d'introduire le ou les monomères de telle sorte que la pression reste sensiblement constante à l'intérieur de la zone de polymérisation. Dans le cas de monomères gazeux, comme l'éthylène, l'introduction peut être contrôlée par des moyens connus, par exemple par un régulateur de pression prévu sur l'alimentation en monomère(s).

Les monomères liquéfiables, par exemple le butène-1, peuvent être injectés en continu dans la zone de polymérisation, par des moyens connus de l'homme de l'art, de manière que la pression à l'intérieur de la zone de polymérisation reste sensiblement constante. Dans des installations à petite échelle, une pompe à membrane convient à cet effet.

Au cas où l'on veut entreprendre des réactions de copolymérisation, il est avantageux de réaliser une alimentation des monomères à copolymériser dans des proportions relatives bien définies. Il suffit à cet effet d'asservir les moyens d'introduction d'un monomère à ceux prévus pour le ou les autre(s) monomère(s), de manière à obtenir le rapport souhaité. Dans le cas d'un mélange éthylène gazeux et butène-1 liquide, la pompe d'injection du butène-1, peut être alors une pompe à débit variable asservie au signal fourni par le débitmètre fournissant l'information sur la quantité d'éthylène gazeux introduit. De cette manière, le rapport butène/éthylène est maintenu constant de manière automatique. On peut aussi utiliser un analyseur de gaz pour asservir les différents débits.

Toutes les indications ci-dessus concernant la nature des monomères ou co-monomères à mettre en œuvre ainsi que les moyens d'introduction dans la zone de polymérisation sont à la portée de l'homme de l'art et n'ont pas à être décrites plus avant.

Les réactions de polymérisation sont réalisées avec un catalyseur solide, présenté de préférence sous forme granulaire ou particulaire. Ces systèmes catalytiques sont également bien connus de l'homme de l'art. En catalyse hétérogène, en particulier pour les oléfines, on fait appel généralement aux

3

catalyseurs supportés, de type Ziegler-Natta ou de chrome supporté, avec ou sans cocatalyseur approprié.

En catalyse de type Ziegler, on utilise de préférence des catalyseurs à très haute activité dont la composition la plus courante comporte un composé de titane, un composé de magnésium, éventuellement un composé organique donneur d'électrons et éventuellement un support poreux du type oxyde métallique. Ces catalyseurs sont en général mis en œuvre en présence de cocatalyseurs.

Parmi les composés du titane on peut citer, entre autres, les chlorures de titane ($TiCl_3$, $TiCl_4$) et les chlorotitanates.

Le composé de magnésium est en général un halogénure de magnésium, de préférence $MgCl_2$.

Dans certains cas, des agents complexants peuvent être utilisés, en vertu de leur pouvoir donneur d'électrons.

Appartiennent à ces composés les bases de Lewis qui incluent des composés tels que les esters d'alkyle obtenus à partir d'acides carboxyliques aromatiques ou aliphatiques, les éthers aliphatiques ou cycliques, des cétones. Les électrons-donneurs préférés comprennent le formiate de méthyle, le paratoluate de méthyle, l'acétate d'éthyle ou de butyle, l'éther éthylique, le tétrahydrofurane, le dioxane, l'acétone et la méthyl isobutyl cétone.

Les composés de titane, de Mg et électrons donneurs peuvent être répartis sur un support poreux du type gel de silice et silice/alumine, par exemple.

Il s'agit dans ce cas de gels développant une grande surface (300 m$^2$/g) et un grand volume poreux, par exemple de l'ordre de 1,7 cm$^3$/g. Une silice 952 de la Société GRACE répond à ce type de spécification.

Les cocatalyseurs sont du type Al $(R)_a X_b H_c$ avec X = Cl ou OR ; R est un radical alkyle saturé de $C_1$ à $C_{14}$, avec $a + b + c = 3$. De tels activateurs comprennent $Al(C_2H_5)_3$, $Al(C_2H_5)_2Cl$, $Al(i-C_4H_9)_3$, $Al_2(C_2H_5)_3Cl_3$, $Al(iC_4H_9)H_2$, $Al(C_6H_{13})_3$, $Al(C_8H_{17})_3$, $Al(C_2H_5)H_2$ et $Al(C_2H_5)_2(OC_2H_5)$ par exemple.

Dans les catalyseurs de type Ziegler, le titane peut être remplacé par d'autres métaux de transition, tels que le zirconium ou le vanadium.

En catalyse de type chrome supporté, on fait appel à un composé de chrome réparti sur un support poreux à base d'oxyde métallique ; éventuellement d'autres composés peuvent être répartis sur le support poreux, tels que des composés de titane. Une fluoration du catalyseur peut être en outre effectuée.

Avant d'être utilisés en polymérisation ces catalyseurs sont soumis à un traitement thermique à haute température en atmosphère oxydante et anhydre.

Parmi les composés de chrome utilisables, on peut citer l'acétylacétonate de chrome, les chromates organiques, les acétates de chrome et l'oxyde de chrome ($CrO_3$).

Parmi les supports appropriés, on peut citer les gels de silice ou silice alumine (silice GRACE 952 par exemple). Les autres composés à base de titane peuvent être des titanates d'alkyles ou des chlorotitanates. La fluoration peut se faire par décomposition thermique de sels dégageant de l'acide fluorhydrique. Des sels tels que $(NH_4)_2SiF_6$ ou $(NH_4)_2TiF_6$ sont de bons agents de fluoration.

Le traitement thermique peut se faire sous air sec à des températures de l'ordre de 600 à 800 °C.

Les catalyseurs activés obtenus peuvent éventuellement être utilisés en présence de cocatalyseurs du même type que ceux utilisés en catalyse Ziegler.

Les deux systèmes catalytiques décrits peuvent être avantageusement utilisés pour la polymérisation de l'éthylène ou la copolymérisation de l'éthylène avec des α-oléfines.

Les catalyseurs Ziegler sont également utilisés dans la polymérisation du propylène et du butène-1 pour obtenir des produits à haut indice d'isotacticité.

Ainsi qu'il est usuel dans les réactions de polymérisation des oléfines, il convient de travailler à l'abri de l'air et de l'humidité, et de ce fait, la zone de polymérisation est avantageusement débarrassée des traces d'humidité, par balayage avec un gaz tel que l'hydrogène, l'azote ou l'argon ou par mise en contact avec l'un des composants du catalyseur qui est capable d'épurer la zone de polymérisation, ce qui est le cas par exemple des composés d'alkylaluminium, cocatalyseurs dans la catalyse Ziegler.

L'invention combine la forme sphérique de la zone de polymérisation et la nature des moyens d'agitation, ce qui procure un résultat particulièrement avantageux et inattendu dans les réactions de polymérisation.

Les moyens d'agitation contenus dans la zone sphérique de polymérisation comprennent essentiellement un ensemble-turbine à pales profilées. Les pales de la turbine sont pratiquement très proches de la paroi sphérique délimitant la zone de polymérisation. Dans la pratique on a constaté que des intervalles de 1 à 50 millimètres étaient convenables. Les pales de turbine coopèrent avec la paroi sphérique sur 10 à 60 % environ de sa surface. On a constaté que des pales qui s'étendent sur une zone trop faible, inférieure à 10 % environ de la surface sphérique de la zone de polymérisation, n'assuraient pas une agitation suffisamment uniforme et homogène pour obtenir les résultats de l'invention. Par contre, il n'est pas utile, que les pales s'étendent au-delà d'une limite représentant environ 60 % de la surface sphérique. En vue d'une réalisation concrète, la turbine présente des pales d'une longueur telle que le diamètre du cercle décrit par leurs extrémités soit au moins égal au tiers du diamètre de la sphère. Les pales peuvent affleurer la paroi sphérique, jusqu'à atteindre un plan équatorial, auquel cas le diamètre du cercle engendré par leurs extrémités est égal au maximum au diamètre de la sphère, à l'épaisseur des jeux près.

Ces pales peuvent même s'étendre légèrement au-delà du plan équatorial normal à l'axe de rotation. Avantageusement, l'ensemble-turbine comporte de deux à huit pales et de préférence trois pales, réparties symétriquement par rapport à l'axe d'agitation, et profilées de manière à assurer un brassage énergique.

Complémentairement, mais sans que cela soit nécessaire, les moyens d'agitation peuvent comprendre, dans la partie de la zone sphérique de polymérisation non occupée par l'ensemble-turbine, un système-racloir additionnel composé de un ou plusieurs organes entraînés en rotation. Ces organes sont de préférence des pales filiformes, profilées de manière à ne pas perturber le cheminement des gaz.

Optionnellement les moyens d'agitation peuvent comporter encore une ou plusieurs turbines dites dilacératrices dont le rôle, si nécessaire, est de réduire la taille des agglomérats susceptibles de se former pendant la polymérisation. Ces turbines dilacératrices se situent dans la zone se trouvant au-dessus du cercle engendré par l'extrémité des pales de la turbine principale d'agitation.

Grâce à la forme sphérique de la zone de polymérisation, le brassage des gaz et poudres à l'intérieur est important. On pense que ceci est dû au fait que la force centrifuge diminue au fur et à mesure que la poudre de polymère s'élève au-dessus du plan équatorial du réacteur. Lors de cette ascension de la poudre, la gravitation l'emporte à partir d'une certaine hauteur, et les grains retombent vers le centre de la sphère. Ce brassage est obtenu sans qu'il soit nécessaire d'utiliser des contre-pales créant des zones mortes ou mal agitées. On obtient une bonne dispersion des grains, quel que soit leur diamètre. Le système de racloir additionnel, qui est profilé de façon à ne pas perturber le cheminement des gaz permet éventuellement d'éviter toute agglomération électrostatique, ou autre, de la poudre de polymère en formation.

La combinaison de la forme sphérique de la zone de polymérisation et du mode d'agitation permet aussi d'obtenir d'excellents coefficients de transfert avec la paroi ainsi qu'un contact intime entre les fluides introduits dans le réacteur, et la poudre de polymère en croissance, tout en maintenant la bonne fluidisation des poudres, sans que se crée aucune zone non agitée. Grâce à cette combinaison de la forme sphérique et des moyens d'agitation, on obtient une parfaite dispersion du catalyseur, de la poudre de polymère en croissance et du mélange gazeux réactionnel. C'est ainsi que la polymérisation se déroule toujours dans de bonnes conditions, quelles que soient la charge et la granulométrie du polymère présent dans la zone de polymérisation, cette charge pouvant même être nulle ou presque nulle lors des démarrages.

En outre, la dimension granulométrique des catalyseurs et des poudres de polymères devient sans importance. On peut donc mettre en œuvre selon l'invention, une gamme beaucoup plus large de catalyseurs solides.

Selon l'invention, on prévoit aussi une régulation de la température de polymérisation. Les moyens mis en œuvre à cet effet ne sont pas critiques et peuvent être de nature très variée. Selon une forme de réalisation, ils peuvent comprendre une double enveloppe avec des entrées et sorties pour la circulation du fluide de régulation. Dans le cas de l'invention, la double enveloppe épouse celle de la paroi délimitant la zone de polymérisation et est donc de forme générale sphérique. Elle est munie de tubulures respectives pour la circulation du fluide de régulation.

Dans ce premier mode de régulation, la régulation de température est obtenue de l'extérieur.

Selon d'autres modes de régulation, qui peuvent s'avérer préférés, la régulation de température est obtenue à l'intérieur même de la zone de polymérisation, ce qui est particulièrement favorable dans le cas présent, en raison de la forme sphérique. On peut à cet effet injecter dans la zone de polymérisation un gaz refroidi, un fluide comprimé se refroidissant par détente, ou un liquide se vaporisant dans les conditions régnant à l'intérieur de la zone de polymérisation.

Sous un autre aspect, l'invention concerne également un réacteur de polymérisation en phase gazeuse faisant appel à la catalyse hétérogène, comportant essentiellement des moyens d'introduction du ou des monomères à polymériser et du système catalytique, des moyens d'agitation du catalyseur en particules solides ainsi que du polymère en formation, des moyens pour la régulation de la température et des moyens de soutirage du polymère obtenu, ledit réacteur étant caractérisé en ce qu'il est de forme essentiellement sphérique, et en ce que les moyens d'agitation comprennent essentiellement un ensemble-turbine à pales profilées, entraîné en rotation, lesdites pales affleurant la paroi interne du réacteur sur 10 à 60 % de sa surface.

Pour ce qui concerne les caractéristiques des moyens d'agitation équipant le réacteur selon l'invention, on se reportera à ce qui a été indiqué précédemment. L'ensemble-turbine est installé de préférence dans la partie inférieure du réacteur. Le pivot de cet ensemble est logé au niveau de la paroi du réacteur, en un point situé dans la partie basse de celui-ci, mais non nécessairement au point le plus bas de la sphère. Les moyens d'entraînement de l'ensemble-turbine comprennent un arbre qui traverse de manière étanche la paroi du réacteur. L'arbre peut être vertical ou occuper toute autre position oblique par rapport à la verticale, selon la position du pivot de l'ensemble-turbine. L'arbre peut être court, en particulier dans le cas où les moyens d'entraînement se situent au voisinage immédiat de la paroi du réacteur, l'arbre ne faisant alors que traverser la paroi pour réunir les moyens d'entraînement au pivot de l'ensemble-turbine. Dans d'autres cas, l'arbre peut s'étendre à travers le réacteur, par exemple si les moyens d'entraînement se situent à la partie supérieure du réacteur. Dans de tels cas, l'arbre peut être vertical, mais cette position n'est pas critique.

Si le système racloir additionnel est présent, il se trouve dans la partie supérieure du réacteur sphérique. Il peut être actionné par des moyens d'entraînement qui lui sont propres ou par les mêmes moyens que ceux utilisés pour l'entraînement de l'ensemble-turbine, lequel constitue le moyen essentiel d'agitation dans le réacteur selon l'invention. Si une ou des turbines dilacératrices sont présentes, elles se situent dans la partie située au-dessus du cercle engendré par l'extrémité des pales de la turbine principale.

Pour ce qui concerne les moyens de régulation de la température, on se reportera aussi à la description qui a été faite précédemment à propos du procédé selon l'invention.

Le réacteur selon l'invention comporte aussi des moyens pour soutirer le polymère obtenu, par exemple au moins une vanne avec tubulure de décharge, piquée dans la partie basse du réacteur sphérique.

Il convient aussi que le réacteur puisse être mis en communication avec l'atmosphère. On peut prévoir à cet effet une tubulure piquée dans le dôme supérieur du réacteur.

Des moyens sont également prévus pour introduire des quantités renouvelées de catalyseurs, et d'éventuels limiteurs de chaîne tels l'hydrogène, en particulier en vue d'une marche continue.

Le réacteur selon l'invention se prête parfaitement à une marche continue. On prélève la poudre de polymère à la partie inférieure du réacteur et on introduit un débit du ou des monomère(s), correspondant à leur consommation au cours de la réaction de polymérisation ; le monomère gazeux est ainsi absorbé au fur et à mesure que la réaction se développe. Un dispositif d'introduction des catalyseurs permet d'entretenir l'exothermicité de la réaction.

On notera aussi que, pour certains besoins, le réacteur peut être muni d'un dispositif de sas permettant de prélever des échantillons de produits en cours de réaction. Ce sas peut être utilisé sous forme d'une tubulure munie de vannes, piquée à un endroit quelconque du réacteur et susceptible d'être balayée par une atmosphère inerte.

Une forme de réalisation avantageuse d'un réacteur de petites dimensions conforme à l'invention, est de le constituer de deux demi-sphères assemblées selon leur plan équatorial. L'assemblage des deux demi-sphères est effectué par des moyens de serrage, par exemple des serre-joints, répartis à la périphérie du réacteur dans le plan équatorial d'assemblage. On peut ainsi facilement démonter les demi-sphères et accéder à l'intérieur du réacteur.

La forme des réacteurs industriels conformes à l'invention n'est pas forcément celle d'une sphère intégrale complète. Selon l'invention, la seule caractéristique importante est que la zone de polymérisation soit délimitée par une paroi sphérique. Mais, par ailleurs, diverses tubulures, raccords ou ouvertures, peuvent interrompre ou modifier la forme sphérique du réacteur. Ainsi, pour la commodité de l'utilisation et notamment du nettoyage, le réacteur peut comprendre des ouvertures de taille suffisante pour permettre l'accès à l'intérieur, et par exemple, laisser entrer un homme dans le cas des gros réacteurs.

Dans la pratique, le réacteur de l'invention est intégré dans une installation plus complète comportant des circuits pour l'alimentation en monomères, en gaz inertes et gaz régulateurs de chaînes. Dans le cas de monomères gazeux, ces circuits comprennent des moyens pour mettre sous pression le gaz monomère et pour établir une pression constante d'introduction, telle que définie par exemple par un régulateur de pression. Le circuit contient aussi avantageusement un débitmètre fournissant la valeur du débit instantané de gaz introduit. S'il s'agit de monomères liquides devant être vaporisés dans les conditions de mise en œuvre au sein du réacteur, on peut réaliser leur injection à l'aide d'une pompe à membrane ou de tout autre dispositif équivalent. Le circuit d'injection comporte aussi un débitmètre donnant une lecture directe du débit instantané de liquide fourni.

Si l'on veut introduire des monomères conjointement en vue d'effectuer une copolymérisation, on pourra asservir le débit de chaque circuit pour obtenir un rapport relatif précis et constant entre les monomères.

D'une manière générale on peut utiliser un analyseur de gaz qui permet d'asservir à tout instant les débits aux conditions réactionnelles souhaitées.

Bien entendu également, l'installation comprend des boîtiers pour la régulation des températures et des débits ainsi que des enregistreurs pour les différents paramètres de réaction tels que :

— température du réacteur,
— température des fluides caloporteurs en différents points de l'installation,
— vitesse d'agitation,
— couple agissant sur l'agitateur,
— pression de réaction,
— débit du ou des monomère(s).

On peut ainsi suivre d'une manière précise l'évolution des réactions de polymérisation.

L'invention peut être utilisée avec avantage pour la prépolymérisation des oléfines, par exemple de l'éthylène, du propylène, du butène-1 et autres oléfines mentionnées précédemment. Le prépolymère peut être préparé directement au sein de la zone sphérique de polymérisation, pour régler la granulométrie du catalyseur et réduire son activité au début de la réaction, après quoi on poursuit la polymérisation dans le même réacteur dans des conditions bien contrôlées. Mais, de préférence, on met

**0 081 407**

en œuvre le réacteur de l'invention comme réacteur annexe de prépolymérisation, le prépolymère étant alors introduit dans un autre réacteur de polymérisation en phase gazeuse. Au sein du réacteur de prépolymérisation, les grains de catalyseur grossissent et deviennent moins sensibles à l'environnement de la zone de polymérisation. Le prépolymère à activité catalytique est ensuite transféré dans un autre réacteur, de type quelconque, à lit fluide ou agité, ou un réacteur sphérique conforme à l'invention. L'invention convient parfaitement bien pour l'obtention d'un tel prépolymère et les résultats ainsi réalisés sont aussi avantageux que surprenants.

L'invention sera maintenant davantage illustrée, sans être aucunement limitée, par la description ci-après, faite en référence aux dessins annexés sur lesquels :

Figures 1a à 1f  sont des schémas illustrant des modes de mise en œuvre du procédé de l'invention ;
Figure 2  est une coupe axiale d'un réacteur de petites dimensions, conforme à l'invention ;
Figure 3  est une vue schématique de face des moyens d'agitation du réacteur de la figure 2 ;
Figure 4  est une vue en perspective par-dessus de la moitié inférieure du réacteur de la figure 2, montrant aussi le système d'agitation.

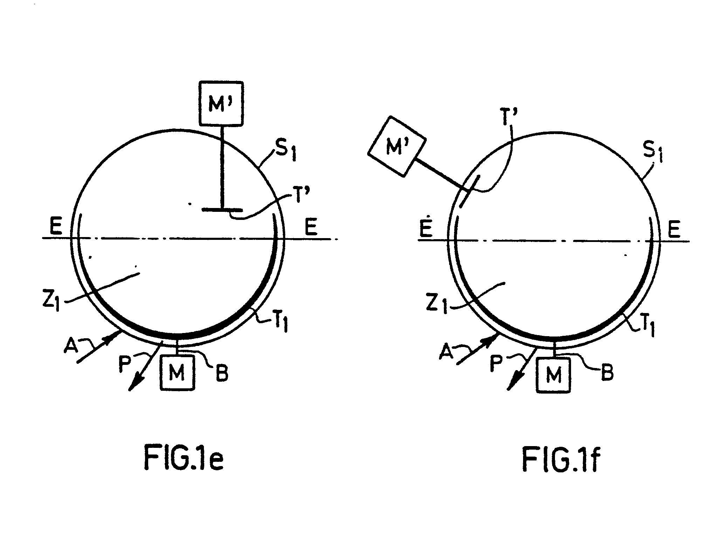

Les figures 1a et 1f sont des schémas illustrant des exemples de zones de polymérisation appliquant le procédé de l'invention.

La figure 1a montre une zone $Z_1$ fermée de polymérisation, délimitée par une paroi sphérique $S_1$. Un ensemble-turbine $T_1$ à pales symétriques est monté à rotation autour d'un pivot B situé sensiblement au point bas de la sphère. Un moteur M entraîne la turbine $T_1$. L'alimentation du ou des monomère(s) est schématisée par la flèche A. Le polymère obtenu est prélevé comme représenté en P. Dans cet exemple, les extrémités des pales de l'ensemble-turbine $T_1$ dépassant le plan équatorial E-E normal à l'axe de rotation (lequel est sensiblement vertical dans le cas de la figure 1a) et coopèrent avec la paroi sphérique interne jusqu'à 60 % de sa surface.

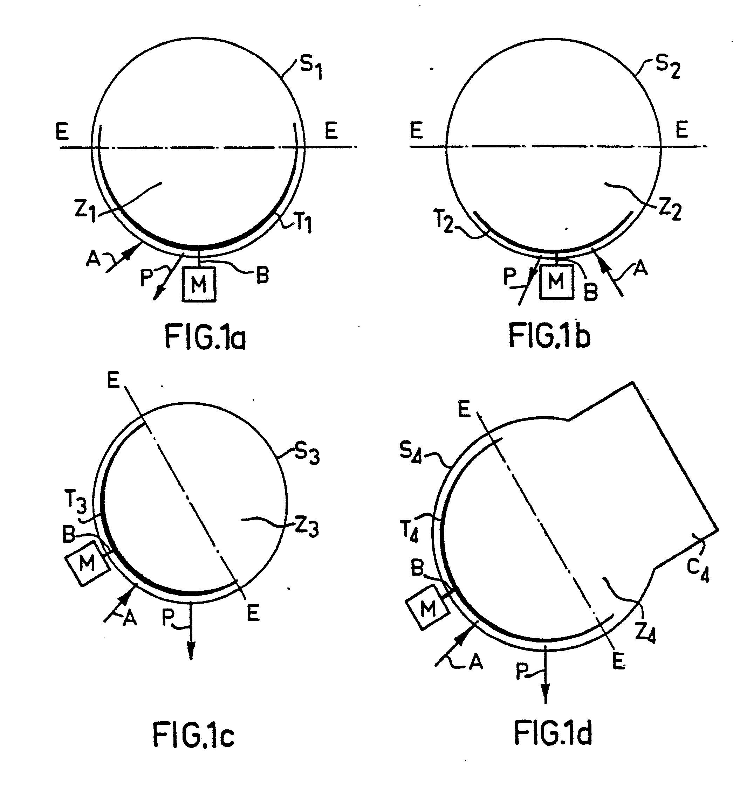

La figure 1b montre une zone $Z_2$ fermée de polymérisation, délimitée par une paroi sphérique $S_1$. Un ensemble-turbine $T_2$, monté à rotation autour d'un pivot B est entraîné par un moteur M, de la même manière qu'à la figure 1a. L'alimentation en monomère(s) est représentée en A et la sortie du polymère est schématisée en P. Dans le cas de la figure 1b les extrémités des pales de l'ensemble-turbine $T_2$ décrivent un cercle dont le diamètre est égal au moins au tiers du diamètre de la sphère $S_2$.

La figure 1c  est un schéma analogue aux figures 1a et 1b montrant une zone de polymérisation $Z_3$ délimitée par une sphère $S_3$. L'ensemble-turbine $T_3$ entraîné par le moteur M tourne autour d'un pivot B, qui est décalé par rapport au point bas de la sphère. Le ou les monomères sont introduits en A et le polymère obtenu est prélevé en P. Dans ce cas, l'axe de rotation de la turbine $T_3$ n'est pas vertical. Le plan équatorial (trace E-E) perpendiculaire à cet axe de rotation est oblique. Les extrémités des pales de la turbine $T_3$ décrivent un cercle dont le diamètre est sensiblement égal à celui de la sphère $S_3$.

La figure 1d illustre une zone de polymérisation $Z_4$ essentiellement sphérique délimitée par une paroi sphérique $S_4$ et par un prolongement cylindrique $C_4$ pouvant servir de sas ou permettant l'accès à la zone $Z_4$. Le montage de la turbine $T_4$ entraînée par le moteur M autour d'un pivot B, est le même qu'à la figure 1c. Le ou les monomère(s) sont introduits en A et le polymère obtenu est prélevé en P.

Les figures 1e et 1f représentent des variantes de réalisation correspondant à la figure 1a, dans lesquelles sont prévues des turbines T' entraînées par un moteur M'.

Ces turbines dites « dilacératrices » ont pour fonction de réduire la taille des agglomérats éventuels se formant pendant la polymérisation. Ces turbines T' sont disposées dans la zone du réacteur située au-dessus du cercle engendré par la turbine principale $T_1$, si l'on se réfère aux figures 1e et 1f.

Aux figures 1a à 1f on n'a pas représenté les moyens de régulation de la température qui, par exemple, peuvent consister en une double enveloppe dans laquelle circule un fluide régulateur.

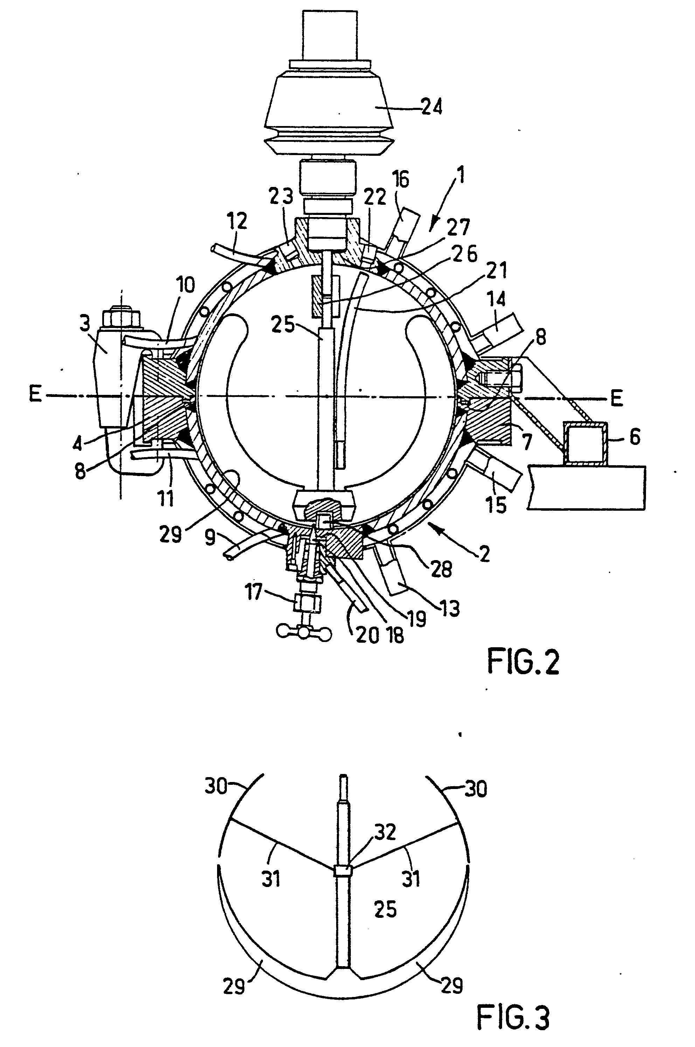

Aux figures 2 à 4, on a représenté un réacteur conforme à l'invention, qui convient pour des opérations à échelle pilote et présente les caractéristiques suivantes :

— diamètre intérieur : 250 mm
— volume : 8,2 l
— pression d'épreuve : $75 \cdot 10^5$ Pa (75 bars)
— pression en service : $50 \cdot 10^5$ Pa (50 bars)

Le réacteur sphérique représenté à la figure 2 est constitué de deux demi-sphères, une demi-sphère supérieure 1 et une demi-sphère inférieure 2. Ces éléments sont usinés dans de l'acier inoxydable et leur surface intérieure est polie. Les demi-sphères 1 et 2 sont assemblés et maintenues par des serre-joints 3 répartis à la périphérie 4 du réacteur dans un plan diamétral.

On a représenté en 6 un support permettant de tenir le réacteur dans la position représentée à la figure 2. Ce support 6 coopère avec une pièce 7, elle-même soudée sur la paroi du réacteur. Le joint en « Téflon » 8 assure l'étanchéité des deux demi-sphères.

En vue de la régulation de température le réacteur est entouré d'une chemise. A l'intérieur de cette chemise se trouvent deux circuits d'échanges thermiques, à savoir un circuit d'huile assurant la chauffe et la régulation de température et un circuit d'eau circulant à l'intérieur d'un serpentin immergé dans le circuit d'huile et assurant un refroidissement énergique en cas d'échauffement rapide de la réaction.

7

On a représenté en 9, 10 les tubulures d'entrée du serpentin canalisant l'eau de refroidissement et en 11, 12 les tubulures de sortie du serpentin à eau.

De même, on a représenté en 13 et 14 les tubulures d'entrée du circuit de régulation température à huile et en 15 et 16 les tubulures pour la sortie du fluide de régulation à huile. Les moyens de régulation comportent aussi une pompe de circulation d'huile et deux échangeurs externes placés sur le circuit huile qui ne sont pas représentés aux dessins. Un tel système suffit normalement à une bonne régulation température. Le circuit d'eau dans le serpentin immergé dans le circuit d'huile ne s'avère utile qu'en cas de forte exothermicité de la réaction.

A sa partie inférieure, le réacteur est muni d'une vanne 17 montée de manière classique comme illustré au dessin. Le corps de vanne est monté dans un support 18 avec interposition d'un joint en PTFE 19. Une tubulure 20 sert au soutirage de la poudre de polymère obtenu. Dans la demi-sphère supérieure 1 des orifices tels que 22, 23 assurent l'introduction des monomères, les prises de températures et de pression, etc. Ces piquages sont munis d'une fritte métallique non représentée afin d'éviter un bouchage éventuel. La tubulure 21 est un doigt de gant de thermocouple et débouche dans la demi-sphère inférieure 2.

On a également représenté, d'une manière schématique dans la demi-sphère supérieure 1 un piquage 23 pour permettre la mise à l'atmosphère de l'intérieur dur réacteur. Ce piquage 23 est également muni d'une fritte métallique (non représentée).

L'une des caractéristiques originales du réacteur de l'invention réside dans la structure des moyens d'agitation. Ceux-ci sont visibles aux figures 2 à 4. Un ensemble 24 lequel, dans l'exemple choisi est à commande magnétique, entraîne un arbre 25, disposé verticalement le long d'un diamètre du réacteur sphérique, avec interposition d'un manchon 26 d'accouplement. L'étanchéité du passage d'arbre est assurée par un joint en « Téflon » 27. Une telle commande d'agitation magnétique assure une excellente étanchéité en même temps qu'un important couple pour l'agitation. Un ensemble disponible commercialement qui a donné de bons résultats pour l'invention est le système de commande magnétique de la Société Burton-Corblin, type « magnet-drive ». Il va sans dire que tout autre moyen d'entraînement pourrait être utilisé. La commande magnétique a pour autre avantage de ne pas interférer avec le contenu du réacteur. Les moyens proprement dits d'agitation comprennent un ensemble-turbine porté par un pivot 28 monté au point bas de la demi-sphère inférieure 2. Dans l'exemple choisi, cet ensemble mobile comporte trois pales 29. Ces moyens d'agitation, du type turbine raclante, sont montés de manière que les pales 29 affleurent le fond de la demi-sphère inférieure 2, comme on le voit à la figure 2. Dans cet exemple, l'écartement des pales 29 de la paroi du réacteur au niveau du plan équatorial E-E est de l'ordre de 4 à 5 mm. On voit aussi que les pales 29 s'étendent, une fois le réacteur monté, pratiquement jusqu'à la moitié de celui-ci.

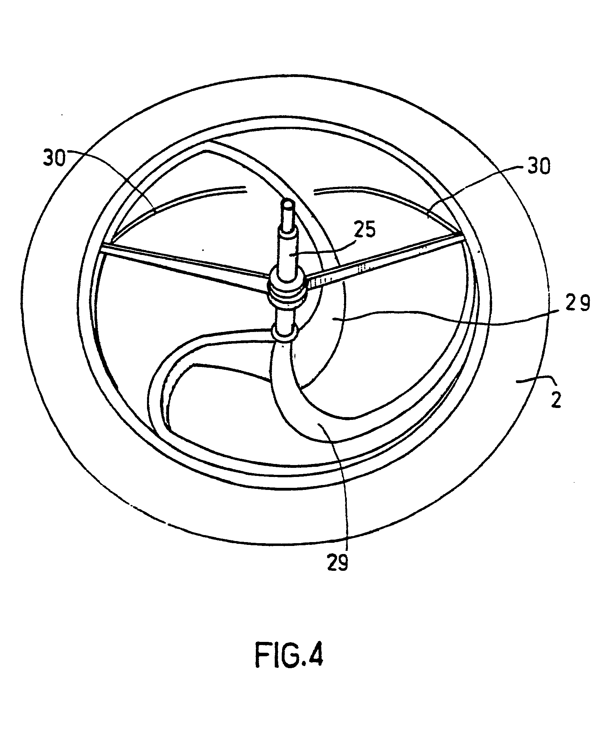

Les moyens d'agitation peuvent comporter complémentairement dans le volume de cette demi-sphère supérieur 1, un agitateur de type racloir, constitué de deux pales filiformes. Pour la clarté du dessin, cet agitateur n'a pas été représenté à la figure 2, mais il est nettement visible aux figures 3 et 4. On voit que les pales 30 sont chacune portées par un bras 31 et que les bras 31 s'étendent symétriquement par rapport à l'axe 25 en étant fixés en un point commun 32 de celui-ci.

D'autres moyens d'agitation peuvent complémentairement faire appel à une ou plusieurs turbines dilacératrices.

L'axe de ces turbines peut soit être dirigé vers le centre de la sphère soit plonger du haut du réacteur comme représenté aux figures (1e, 1f).

La figure 4 montre l'intérieur du réacteur et la position de l'ensemble-turbine avec ses pales 29 dans la demi-sphère inférieure 2. On voit également l'ensemble racleur additionnel avec les pales filiformes 30.

L'ensemble-turbine monté dans la demi-sphère inférieure 2 peut être du type mis sur le marché par la Société MORTIZ S. A. sous la dénomination turbine refoulante. La présente invention tire profit de l'existence de ces turbines et les applique au domaine de la polymérisation en réacteur sphérique sous pression, afin d'obtenir des résultats qui·étaient impossibles à atteindre jusqu'à présent avec ce type de réaction.

Les exemples qui suivent illustrent l'application du procédé de l'invention à la prépolymérisation, à la polymérisation et à la copolymérisation des oléfines. Les exemples qui illustrent l'homopolymérisation de l'éthylène, la copolymérisation éthylène/α-oléfine et la polymérisation du propylène n'ont aucun caractère limitatif l'invention étant applicable à la polymérisation ou à l'interpolymérisation d'autres oléfines en phase gazeuse.

On a indiqué en outre, à titre comparatif, un exemple dans lequel était mis en œuvre un réacteur de forme cylindrique, déjà disponible dans la technique antérieure, muni d'un système agitateur du type ancre marine.

Dans les exemples exécutés selon l'invention, on a utilisé le réacteur décrit en référence aux figures 2 à 4 ayant un diamètre intérieur de 250 mm et un volume de 8,2 l. Quatre exemples portent sur des réactions de polymérisation en fonctionnement discontinu avec divers monomères et catalyseurs, et deux exemples sont relatifs à des polymérisations en continu.

## Exemple 1

Polymérisation en discontinu du propylène (catalyse Ziegler supportée).

On introduit 30 g d'une précharge pulvérulente de polypropylène dans le réacteur sphérique de 8,2 l. Après séchage, le réacteur est balayé avec du propylène gazeux.

Le catalyseur utilisé est du type Ziegler supporté comportant un composé halogéné de titane déposé sur $MgCl_2$ ainsi qu'un agent complexant du type ester aromatique. Ce catalyseur se présente sous la forme d'une poudre sèche de diamètre granulométrique moyen égal à 60 µm.

Ce catalyseur est utilisé en présence d'un composé choisi parmi les donneurs d'électrons (dans le cas présent le méthyl paratoluate ou MPT) et d'un cocatalyseur ou activateur choisi parmi la famille des alkyl-aluminium (dans l'exemple présent le triéthyl aluminium ou TEA).

La charge catalytique comporte dans l'ordre d'introduction 35 millimoles de triéthyl aluminium 6,9 mmol de méthyl paratoluate et 300 mg du catalyseur Ziegler supporté contenant 1,8 % de Ti. Les rapports molaires Al/Ti et TEA/MPT sont respectivement de 310 et 5. On procède ensuite à l'introduction de propylène jusqu'à atteindre $7 \cdot 10^5$ Pa (7 bars) de pression absolue et la réaction est effectuée à 70 °C durant 4 h 50 min. La vitesse d'agitation est de 400 t/min. La pression réactionnelle est maintenue constante par apport de propylène frais.

On recueille en fin de réaction 690 g de polypropylène sous forme de poudre homogène. La dimension granulométrique moyenne de la poudre obtenue est de 500 µm.

Le tableau I ci-après résume les paramètres réactionnels et les propriétés du polymère obtenu.

## Exemple 2

Copolymérisation éthylène/propylène en discontinu

On introduit 30 g d'une précharge pulvérulente de polyéthylène basse densité linéaire dans le réacteur sphérique. Après séchage, le réacteur est balayé à l'azote.

Le catalyseur utilisé est du type Ziegler supporté comportant un composé halogéné de titane supporté sur $MgCl_2$, ainsi qu'un agent complexant de type ester aromatique. Ce catalyseur se présente sous la forme d'une poudre sèche de dimension granulométrique moyenne de 60 µm. Ce catalyseur est utilisé en présence d'un cocatalyseur ou activateur choisi parmi la famille des alkylaluminium (triéthyl aluminium dans l'exemple considéré). La charge catalytique du réacteur comporte par ordre d'introduction 146 mg du catalyseur Ziegler supporté, 12 mmol de triéthylaluminium en solution dans 15 $cm^3$ d'heptane. On élimine les traces de solvant en maintenant le réacteur sous vide à 75 °C durant 10 minutes. Les rapports massiques Al/Ti et Ti/Mg sont respectivement de 126 et 0,125.

Le réacteur est ensuite chargé avec $2 \cdot 10^5$ Pa (2 bars) de propylène, $3 \cdot 10^5$ Pa (3 bars) d'hydrogène et $6 \cdot 10^5$ Pa (6 bars) d'éthylène. La polymérisation est effectuée à 75 °C sous $11 \cdot 10^5$ Pa (11 bars) de pression absolue. La vitesse d'agitation est de 400 t/min. La pression est maintenue constante par introduction d'un mélange gazeux propylène/éthylène avec un rapport molaire propylène/éthylène : 0,06.

Au bout de 4 heures, on recueille 1 310 g de polyéthylène linéaire de basse densité sous forme d'une poudre homogène de dimension granulométrique moyenne égale à 250 µm.

Les paramètres réactionnels et propriétés des produits sont résumés dans le tableau I ci-après.

## Exemple 3

Homopolymérisation en discontinu de l'éthylène

On introduit 30 g d'une précharge pulvérulente de polyéthylène haute densité dans le réacteur sphérique. Après séchage, le réacteur est balayé à l'azote.

Le catalyseur utilisé pour la polymérisation est du type Ziegler supporté comportant un composé halogéné de titane déposé sur $MgCl_2$ ainsi qu'un agent complexant du type ester aromatique. Ce catalyseur se présente sous la forme d'une poudre sèche de dimension granulométrique moyenne égale à 60 µm.

Ce catalyseur est utilisé en présence d'un cocatalyseur choisi parmi la famille des alkyl-aluminium (triéthylaluminium dans l'exemple présent).

La charge catalytique comporte dans l'ordre d'introduction : 146 mg du catalyseur Ziegler supporté contenant 1,8 % de Ti puis 12 millimoles de triéthyl aluminium en solution dans 15 $cm^3$ d'heptane. Le rapport massique Al/Ti est de 126. On élimine les traces de solvant en maintenant le réacteur sous vide à la température de 75 °C durant 10 minutes.

Le réacteur est ensuite chargé avec $3 \cdot 10^5$ Pa (3 bars) d'hydrogène et $8 \cdot 10^5$ Pa (8 bars) d'éthylène. La polymérisation est effectuée à 75 °C sous $11.10^5$ Pa (11 bars) de pression absolue avec une vitesse d'agitation de 400 t/min. La pression est maintenue constante par introduction d'éthylène frais. Au bout de 5 heures, on recueille 1 477 g de poudre homogène de polyéthylène haute densité. Les paramètres réactionnels et propriétés du polymère sont rassemblés dans le tableau I ci-après.

## Exemple 4

Copolymérisation éthylène/butène-1 en discontinu

Après séchage, le réacteur est balayé à l'azote.

Le catalyseur utilisé est du type oxyde de chrome supporté sur gel de silice et modifié avec du titanate d'isopropyle et de l'hexafluorosilicate d'ammonium (voir brevet US 4.011.382). Avant d'être engagé en polymérisation ce catalyseur est activé sous air sec à 650 °C puis purgé à 150 °C sous azote. La composition du catalyseur exprimée en pourcentage par rapport au gel de silice est 1 % en chrome, 0,3 % en F et 4,7 % en titane. Ce catalyseur se présente sous la forme d'une poudre sèche de granulométrie moyenne de 70 μm. La charge catalytique comporte 0,254 g de catalyseur calciné et dégazé à l'azote.

On introduit ensuite $1,6 \cdot 10^5$ Pa (1,6 bars) de butène-1 et $18,4 \cdot 10^5$ Pa (18,4 bars) d'éthylène. La température de la réaction est maintenue à 90 °C. La pression est conservée constante à $20 \cdot 10^5$ Pa (20 bars) relatifs par introduction d'un mélange gazeux butène-1/éthylène dans un rapport molaire butène-1/éthylène = 0,04.

Au bout de 220 minutes, on recueille 1 270 g de polyéthylène linéaire de basse densité sous forme d'une poudre homogène de dimension granulométrique moyenne égale à 700 μm.

## Exemple 5

Copolymérisation éthylène/butène-1 en continu

Après séchage, le réacteur est balayé avec de l'éthylène. Le catalyseur utilisé est du type oxyde de chrome supporté sur gel de silice. Avant d'être engagé en polymérisation ce catalyseur est activé sous air sec à 650 °C puis purgé à 150 °C sous azote.

La composition du catalyseur, exprimée en pourcentage par rapport au gel de silice, est de 1 % en chrome. Ce catalyseur se présente sous la forme d'une poudre sèche de granulométrie moyenne égale à 70 μm.

Un injecteur permet d'introduire 10 mg de catalyseur par coup à l'aide d'un sas. Le gaz vecteur utilisé est l'azote.

Après mise sous pression d'éthylène et de butène-1 les concentrations respectives sont maintenues par une pompe à butène-1 et un compresseur sec pour l'éthylène asservis à un analyseur de gaz. Le rapport molaire de butène-1/éthylène est maintenu à 0,04 durant l'essai. L'accumulation d'azote est évitée par une purge périodique de la phase gazeuse. Le démarrage de la réaction a été effectué avec une vitesse d'injection de 10 mg toutes les 30 secondes pour arriver à 1 500 mg de catalyseur dans le réacteur au bout de 75 minutes. On commence alors à réduire progressivement la vitesse d'injection de catalyseur jusqu'à une vitesse d'injection de 10 mg toutes les 6 minutes et on commence à soutirer le polymère par un système d'extraction constitué de deux vannes synchronisées.

Régime stationnaire

Durant toute la réaction, la pression totale est de $20 \cdot 10^5$ Pa (20 bars) absolus, la température de 90 °C et la vitesse d'agitation de 400 t/min. L'essai a duré 9 heures.

En régime stationnaire le débit de production du réacteur a été réglé par un débit d'injection du catalyseur de 10 mg de catalyseur toutes les 6 minutes et on a soutiré le polymère à l'aide du système d'extraction à raison de 360 g/heure en moyenne. Le polymère obtenu est un polyéthylène linéaire de basse densité correspondant à une productivité moyenne de 3 600 g de PE par gramme de solide catalytique et se présente sous la forme d'une poudre homogène de granulométrie moyenne égale à 550 μm. (La vitesse de soutirage a été réglée par le contrôle de variation du couple de la turbine d'agitation). Le tableau II ci-après résume les paramètres réactionnels et les propriétés du polymère obtenu.

## Exemple 6

Copolymérisation éthylène/butène-1 en continu

Après séchage, le réacteur est balayé avec de l'éthylène. Le catalyseur utilisé est un catalyseur du type Ziegler supporté, comportant un composé halogéné de titane supporté sur $MgCl_2$ ainsi qu'un agent complexant du type ester aromatique.

Ce catalyseur se présente sous la forme d'une poudre sèche de diamètre granulométrique égal à 60 μm. L'injection de ce catalyseur est effectuée à l'aide d'un sas muni de vannes synchronisées. Le gaz vecteur utilisé pour l'injection du catalyseur est de l'azote.

On utilise ce catalyseur en présence d'un cocatalyseur ou activateur choisi parmi la famille des alkyl-aluminiums (triéthyl aluminium dans l'exemple considéré).

Le système d'injection adapté à ce catalyseur permet d'introduire 10 mg environ de poudre de catalyseur Ziegler supporté par pulsion d'injection.

Démarrage du réacteur

Après mise sous pression d'éthylène, de butène-1 et d'hydrogène, les concentrations respectives sont maintenues constantes par une pompe pour le butène-1, un compresseur pour l'éthylène et par détente à partir d'une bouteille pour l'hydrogène, asservis à un analyseur de gaz.

Les pourcentages molaires des gaz sont régulés respectivement aux environs de 18 % pour le butène-1, 24,5 % pour l'hydrogène et 54,5 % pour l'éthylène, la proportion d'azote est maintenue inférieure à 5 % molaire par purge périodique.

Le démarrage de la réaction s'effectue avec une vitesse d'injection de 10 mg de catalyseur Ziegler toutes les minutes. Simultanément, on introduit avec une pompe microdoseuse (type seringue) le triéthyl aluminium dans le réacteur en maintenant à tout moment un rapport molaire Al/Ti de l'ordre de 240. Au bout de 90 minutes, on commence à soutirer le polymère par un système d'extraction constitué de deux vannes et à réduire la vitesse d'injection du catalyseur à 10 mg de catalyseur Ziegler toutes les deux minutes.

Régime stationnaire

En régime stationnaire, le débit de production est réglé par le débit d'injection de catalyseur Ziegler et de cocatalyseur, soit 10 mg de catalyseur Ziegler toutes les deux minutes et 3,69 cm$^3$ de triéthyl aluminium pur par heure.

Durant toute la réaction la pression totale est de $11 \cdot 10^5$ Pa (11 bars) absolus, la température de 75 °C et la vitesse d'agitation de 400 tours par minute.

On soutire le polymère à raison de 870 g de polymère/heure en moyenne. Le polymère obtenu est un polyéthylène linéaire de basse densité correspondant à une productivité de 2 900 g de polymère par gramme de catalyseur Ziegler supporté. Le copolymère se présente sous la forme d'une poudre homogène de polymère de granulométrie moyenne égale à 600 μm. L'essai a été poursuivi sur 16 heures de fonctionnement.

Exemple 7

Synthèse d'un prépolymère et usage du prépolymère pour obtenir un copolymère éthylène/butène-1 en discontinu

a) Prépolymérisation éthylène/butène-1 en discontinu

On introduit 300 g d'une précharge pulvérulente de polyéthylène basse densité linéaire dans le réacteur sphérique. Après séchage, le réacteur est balayé à l'azote ; comme dans l'exemple 2, le catalyseur est du type Ziegler supporté comportant un composé halogène de titane supporté sur MgCl$_2$ ainsi qu'un agent complexant du type ester aromatique. La charge catalytique du réacteur est de 7 g. Ce catalyseur supporté est ensuite additionné de 95 cm$^3$ d'une solution dans l'heptane de triéthyl-aluminium à 180 g/l. Après élimination du solvant et verrouillage du réacteur, on introduit $19 \cdot 10^5$ Pa (19 bars) absolus d'azote et la température du réacteur est portée à 90 °C, ensuite le réacteur est alimenté par un débit constant d'éthylène de 387 g par heure et un débit constant de butène-1 de 30 g par heure. La réaction est arrêtée au bout de 210 minutes. On obtient 1 460 g de prépolymère (charge initiale non comprise).

b) Synthèse d'un copolymère éthylène/butène-1 à l'aide d'un prépolymère.

Au terme de la réaction de prépolymérisation on soutire à l'aide d'un cyclone adapté à la vanne de pied du réacteur 65 g du prépolymère ainsi préparé. Ensuite on opère la réaction de polymérisation en procédant comme suit : le réacteur est vidé de son contenu et séché de la manière habituelle, le cyclone contenant le prépolymère est connecté à la partie supérieure du réacteur, le prépolymère est envoyé dans le réacteur. Cette opération terminée on injecte en solution dans l'heptane 2,25 g de triéthylaluminium. Après évaporation du solvant la température du réacteur est portée à 90 °C et la vitesse d'agitation ajustée à 350 t/min. Après cela on introduit dans l'ordre $2 \cdot 10^5$ Pa (2 bars) de butène, $4 \cdot 10^5$ Pa (4 bars) d'azote, $3 \cdot 10^5$ Pa (3 bars) d'hydrogène et $12 \cdot 10^5$ Pa (12 bars) d'éthylène. Le réacteur est alimenté par un mélange éthylène/butène-1 contenant 4 % molaire de butène-I. Au terme de 4 heures de réaction à pression constante on retire 2 500 g de polyéthylène linéaire de basse densité sous forme d'une poudre homogène de dimension granulométrique moyenne égale à 420 μm. Tout au long de la réaction l'exothermicité a été parfaitement contrôlée.

La productivité du polymère est de l'ordre de 9 450 g de polyéthylène par gramme de catalyseur Ziegler.

Exemple 8 (comparaison)

Homopolymérisation de l'éthylène en discontinu dans un réacteur de forme cylindrique avec agitateur du type ancre marine.

On utilise pour cet essai un réacteur de forme cylindrique ayant un volume de 2,2 l. L'agitateur employé est du type ancre marine. Après séchage, le réacteur est balayé avec de l'éthylène. Le catalyseur utilisé est du type oxyde de chrome supporté sur gel de silice. Avant d'être engagé en polymérisation, le catalyseur est activé sous air sec à 650 °C puis purgé à 150 °C sous azote. La composition du catalyseur, exprimée en pourcentage par rapport au gel de silice est de 1 % en chrome. Ce catalyseur se présente sous la forme d'une poudre sèche de granulométrie moyenne de 70 μm. La charge catalytique est de 0,350 g de catalyseur calciné et dégazé à l'azote.

On introduit ensuite $20 \cdot 10^5$ Pa (20 bars) d'éthylène. La réaction est effectuée à 90 °C et la pression est maintenue constante par introduction d'éthylène frais. Au bout de 3 h 30 min on recueille 296 g de polyéthylène haute densité qui se présente sous la forme de 82 g de poudre non homogène et 214 g de blocs de polymères constitués de poudres agglomérées. La productivité de la poudre divisée est de 997 g de polymère/g de catalyseur.

On constate donc que la réaction de polymérisation fournit un polymère de caractéristiques non uniformes, qui résultent du fait que les conditions de mise en contact de l'éthylène et du catalyseur agité ne sont pas satisfaisantes dans le réacteur cylindrique.

Ce même essai a été reproduit avec différents types de mobiles (pale type hélice d'aviation ou agitateur dissymétrique) à différentes vitesses d'agitation. Il en résulte après polymérisation la formation d'une poudre peu homogène avec formation d'une forte proportion d'agglomérats et de dépôts dans les angles du réacteur.

(Voir Tableaux I et II pages 13 et 14)

## Tableau I

### Polymérisations en discontinu selon l'invention

TEA : triéthyl aluminium ; MPT = méthyl paratoluate ; $MI_2$ = indice de fusion à 190 °C ; MVA = masse volumique apparente

| | Homopolymérisation de l'éthylène Ex.3 | Copolymérisation éthylène/butène-1 Ex.4 | Copolymérisation éthylène/propylène Ex.2 | Homopolymérisation du propylène Ex.1 | Copolymère éthylène/butène-1 Ex.7 |
|---|---|---|---|---|---|
| Type de catalyseur | Ziegler supporté | $SiO_2/CrO_3/TiO_2/F$ | Ziegler supporté | Ziegler supporté | Prépolymère obtenu avec catalyseur Ziegler |
| Cocatalyseur | TEA | | TEA | TEA | TEA |
| Agent complexant | | | | MPT | |
| moyen des particules de catalyseur | 60 µm | 70 µm | 60 µm | 60 µm | 550 µm |
| moyen des particules de polymère | 400 µm | 700 µm | 400 µm | 500 µm | 650 µm |
| Poids de polymère obtenu après déduction charge initiale | 1 447 g | 1 270 g | 1 280 g | 660 g | 2 500 g |
| Productivité en g polymère/g catalyseur | 9 910 | 5 000 | 8 767 | 2 100 | 9 450 |
| $MI_2$ | 0,5 | 1,1 | 3,1 | 10 * | 4,8 |
| Densité | 0,96 | 0,919 | 0,923 | | 0,920 |
| Indice d'isotacticité | | | | 87,2 | |
| MVa du polymère | 0,34 | 0,49 | 0,35 | 0,44 | 0,48 |

* Indice de fusion pour le polypropylène effectué avec un poids de 2,160 kg à 230 °C.

## Tableau II

### Polymérisations en continu selon l'invention

TEA = triéthyl aluminium ; MPT = méthyl paratoluate : $MI_2$ = indice de fusion à 190 °C ; MVa : masse volumique apparente

| | Copolymère éthylène-butène-1 | |
|---|---|---|
| | Ex. 6 Catalyse Ziegler | Ex. 5 Catalyse au chrome |
| Type de catalyseur | Ziegler supporté | $SiO_2/CrO_3$ |
| Cocatalyseur | TEA | |
| Agent complexant | | |
| moyen des particules de catalyseur | 60 μm | 70 μm |
| moyen des particules de polymère | 600 μm | 550 μm |
| Poids de polymère obtenu | 870 g/heure | 360 g/heure |
| Productivité en g polymère/g catalyseur | 2 900 | 3 600 |
| $MI_2$ | 0,7 | 0,12 |
| Densité | 0,927 | 0,922 |
| MVa | 0,37 | 0,48 |

# 0 081 407

**Revendications**

1. Procédé de polymérisation en phase gazeuse faisant appel à la catalyse hétérogène par mise en contact d'au moins un monomètre oléfinique, gazeux dans les conditions de réaction, avec un catalyseur solide, dans une zone de polymérisation agitée, ledit procédé étant caractérisé en ce qu'on utilise une zone de polymérisation (Z1, Z2, Z3, Z4) délimitée par une paroi sphérique (S1, S2, S3, S4) et en ce qu'on réalise l'agitation à l'aide d'un ensemble turbine (T1, T2, T3, T4) à pales, entraîné en rotation, lesdites pales affleurant ladite paroi sur 10 à 60 % de sa surface, les particules de catalyseur ainsi que la poudre de polymère en croissance étant entraînées par la force centrifuge sur au moins une partie de la paroi sphérique et retombant dans la partie centrale de la zone sphérique, en assurant ainsi un brassage énergique, uniforme et sans zones mortes.

2. Procédé selon la revendication 1, caractérisé en ce qu'on utilise des monomères oléfiniques se présentant sous forme gazeuse ou des monomères liquéfiables capables d'être injectés dans la zone de polymérisation, lesdits monomères pouvant être utilisés conjointement avec des gaz inertes et/ou des gaz régulateurs de chaînes, tels que l'hydrogène, agissant sur les réactions de transfert.

3. Procédé selon l'une des revendications 1 ou 2, caractérisé en ce qu'on travaille à des pressions inférieures à la pression atmosphérique et allant jusqu'à $506\,625 \cdot 10^2$ Pa (500 atm) ou davantage, la gamme préférée se situant entre $101\,325$ Pa et $8\,106 \cdot 10^3$ Pa (1-80 atm) environ.

4. Procédé selon l'une quelconque des revendications 1 à 3, caractérisé en ce qu'on travaille à des températures en dessous de la température ordinaire et allant jusqu'à 250 °C ou davantage, la gamme préférée se situant entre la température ordinaire et 150 °C environ.

5. Procédé selon l'une quelconque des revendications 1 à 4, caractérisé en ce que, à titre de monomères, on utilise pour des réactions d'homopolymérisation, l'éthylène ou le propylène ainsi que des oléfines comportant 3 à 18 atomes de carbone et mieux 3 à 8 atomes de carbone, y compris le butène-1, le pentène-1, le méthyl-4-pentène-1, l'heptène-1, l'hexène-1, l'octène-1 et leurs mélanges, et, pour les réactions de copolymérisation, celles qui font appel à la copolymérisation d'éthylène et de propylène, ainsi qu'à la copolymérisation de l'éthylène et/ou des oléfines de 3 à 18 atomes de carbone, pouvant être à chaîne droite ou ramifiée, par exemple le butène-1, le pentène-1, l'hexène-1, le méthyl-4-pentène-1, l'heptène-1, l'octène-1, le nonène-1, le décène-1, l'undécène-1, le dodécène-1, le tridécène-1, le tétradécène-1, le pentadécène-1, l'hexadécène-1, l'heptadécène-1, l'octadécène-1 et leurs mélanges.

6. Procédé selon l'une quelconque des revendications 1 à 5, caractérisé en ce qu'on utilise des dioléfines ou des dioléfines conjuguées, en particulier des diènes tels que le butadiène, l'isoprène, l'hexadiène-1,4, l'hexadiène-1,5, le vinylnorbornène, l'éthylidènenorbornène et le dicyclopentadiène, à titre de co-monomères et spécialement de ter-monomères.

7. Procédé selon l'une quelconque des revendications 1 à 6, caractérisé en ce qu'on utilise un catalyseur solide, présenté sous forme granulaire ou particulaire, du type Ziegler-Natta supporté, à savoir un catalyseur comportant un composé de métal de transition tel que Ti, V ou Zr au contact d'un composé de magnésium, éventuellement en présence d'un composé organique donneur d'électrons, l'ensemble ainsi constitué pouvant être réparti sur un support poreux du type oxyde métallique, le composé catalytique qui résulte de ces associations étant mis en œuvre en présence d'un co-catalyseur du type alkyl-aluminium ou alcoolate d'aluminium.

8. Procédé selon l'une quelconque des revendications 1 à 6, caractérisé en ce qu'on utilise un catalyseur solide, présenté sous forme granulaire ou particulaire, du type chrome supporté, à savoir comprenant au moins un composé de chrome réparti sur un support poreux à base d'oxyde métallique, éventuellement en présence d'autres composés tels que des composés organiques du titane, le cas échéant en présence de sels fluorés, lesdits catalyseurs au chrome, avant d'être utilisés en polymérisation, étant activés sous air sec à haute température et après purge à l'azote, le catalyseur au chrome obtenu pouvant être mis en œuvre tel quel ou en présence de catalyseurs du type alkyl-aluminium ou alcoolate d'aluminium.

9. Procédé selon l'une quelconque des revendications 1 à 8, caractérisé en ce qu'on réalise l'agitation par un ensemble-turbine dont les pales profilées sont très proches de la paroi sphérique délimitant la zone de polymérisation, des intervalles de 1 à 50 millimètres étant préférés.

10. Procédé selon l'une quelconque des revendications 1 à 9, caractérisé en ce que l'ensemble-turbine présente des pales (T1, T2, T3, T4, 29) d'une longueur telle que le diamètre du cercle décrit par leurs extrémités soit au moins égal au tiers du diamètre de la sphère.

11. Procédé selon l'une quelconque des revendications 1 à 10, caractérisé en ce que les pales de l'ensemble-turbine affleurent la paroi sphérique, jusqu'à atteindre un plan équatorial, auquel cas le diamètre du cercle engendré par leurs extrémités est égal au maximum au diamètre de la sphère, à l'épaisseur des jeux près, les pales pouvant même dépasser le plan équatorial (E-E) normal à l'axe de rotation.

12. Procédé selon l'une quelconque des revendications 1 à 11, caractérisé en ce que l'ensemble-turbine comporte de deux à huit pales et de préférence trois pales, réparties symétriquement par rapport à l'axe d'agitation, et profilées de manière à assurer un brassage énergique.

13. Procédé selon l'une quelconque des revendications 1 à 12, caractérisé en ce qu'on réalise une agitation complémentaire dans la partie de la zone sphérique de polymérisation non occupée par l'ensemble-turbine à l'aide d'un système racloir additionnel (30, 31) composé de plusieurs organes, de préférence des pales filiformes (30), présentant une symétrie de révolution et profilés de manière à ne pas perturber le cheminement des gaz.

14. Procédé selon l'une des revendications 1 à 12, caractérisé en ce qu'on réalise une agitation complémentaire dans la partie de la zone sphérique de polymérisation non occupée par l'ensemble-turbine, à l'aide d'une ou plusieurs turbines dilacératrices permettant l'élimination d'agglomérats éventuels.

15. Procédé selon l'une quelconque des revendications 1 à 14, caractérisé en ce qu'on règle la température dans la zone de polymérisation, de l'extérieur, en réalisant la paroi sphérique sous forme d'une double enveloppe où l'on fait circuler un fluide de régulation, et/ou de l'intérieur même de la zone de polymérisation en y injectant un gaz refroidi, un fluide comprimé se refroidissant par détente ou un liquide se vaporisant dans les conditions régnant à l'intérieur de la zone de polymérisation.

16. Procédé selon l'une quelconque des revendications 1 à 15, caractérisé en ce qu'on conduit les réactions de prépolymérisation, d'homopolymérisation et d'interpolymérisation jusqu'à l'obtention d'une poudre sèche de polymère.

17. Procédé selon l'une quelconque des revendications 1 à 16, caractérisé en ce qu'on conduit la polymérisation en vue de régler la granulométrie du catalyseur et d'obtenir un prépolymère susceptible d'être utilisé dans une étape ultérieure de polymérisation.

18. Procédé selon l'une quelconque des revendications 1 à 16, caractérisé en ce qu'on conduit la polymérisation en vue de régler la granulométrie du catalyseur et en ce qu'une étape ultérieure de polymérisation est réalisée en phase gazeuse, en lit fluide ou agité.

19. Réacteur de polymérisation en phase gazeuse avec catalyse hétérogène, comportant essentiellement des moyens (A, 22, 23) d'introduction du ou des monomère(s) à polymériser, des moyens d'agitation du catalyseur en particules solides ainsi que du polymère en formation, des moyens pour la régulation de la température et des moyens (P 17, 20) de soutirage du polymère obtenu, ledit réacteur étant caractérisé en ce qu'il est de forme essentiellement sphérique, et en ce que les moyens d'agitation comprennent essentiellement un ensemble-turbine (T1, T2, T3, T4, 29) à pales profilées, entraînées en rotation, lesdites pales affleurant la paroi interne du réacteur sur 10 à 60 % de sa surface.

20. Réacteur selon la revendication 19, caractérisé en ce que les pales profilées de l'ensemble-turbine sont très proches de la paroi interne du réacteur, des intervalles de 1 à 50 millimètres étant préférés entre les pales et la paroi.

21. Réacteur selon l'une des revendications 19 ou 20, caractérisé en ce que l'ensemble-turbine présente des pales (T1, T2, T3, T4, 29) d'une longueur telle que le diamètre du cercle décrit par leurs extrémités soit au moins égal au tiers du diamètre de la sphère.

22. Réacteur selon l'une quelconque des revendications 19 à 21, caractérisé en ce que les pales de l'ensemble-turbine affleurent la paroi sphérique jusqu'à atteindre un plan équatorial, auquel cas le diamètre du cercle engendré par leurs extrémités est égal au maximum au diamètre de la sphère, à l'épaisseur des jeux près, les pales pouvant même dépasser le plan équatorial (E-E) normal à l'axe de rotation.

23. Réacteur selon l'une quelconque des revendications 19 à 22, caractérisé en ce que l'ensemble-turbine comporte de deux à huit pales et de préférence trois pales, réparties symétriquement par rapport à l'axe d'agitation, et profilées de manière à assurer un brassage énergique.

24. Réacteur selon l'une quelconque des revendications 19 à 23, caractérisé en ce que les moyens d'agitation comprennent, en plus de l'ensemble-turbine, un système racloir additionnel (30, 31) composé de plusieurs organes de préférence des pales filiformes (30), entraînés en rotation et profilés de manière à ne pas perturber le cheminement des gaz.

25. Réacteur selon l'une quelconque des revendications 19 à 24, caractérisé en ce que les moyens d'agitation comprennent en plus de l'ensemble-turbine, une ou plusieurs turbines (T') dites dilacératrices, situées dans la zone se trouvant au-dessus du cercle engendré par l'extrémité des pales de la turbine principale.

26. Réacteur selon l'une quelconque des revendications 19 à 25, caractérisé en ce que l'ensemble-turbine est installé dans la partie inférieure du réacteur.

27. Réacteur selon l'une quelconque des revendications 19 à 26, caractérisé en ce que s'il est présent, le système racloir additionnel est logé dans la partie supérieure du réacteur sphérique.

28. Réacteur selon l'une quelconque des revendications 19 à 27, caractérisé en ce qu'il comporte des moyens pour introduire des quantités renouvelées de catalyseur, en particulier par un système de sas sous couverture de gaz inerte.

29. Prépolymères, homopolymères et copolymères d'oléfines obtenus par le procédé selon l'une quelconque des revendications 1 à 17 ou dans le réacteur selon l'une quelconque des revendications 19 à 28, sous forme de poudre sèche, homogène et sans agglomérats.

## Claims

1. Gas phase polymerization process using heterogeneous catalysis by contacting at Least one

16

olefinic monomer, gaseous under the reaction conditions, with a solid catalyst, in a stirred polymerization zone, the said process being characterized in that a polymerization zone (Z1, Z2, Z3, Z4) bounded by a spherical wall (S1, S2, S3, S4) is used and in that the stirring is produced with the aid of a turbine assembly (T1, T2, T3, T4) with blades, driven in rotation, with the said blades skimming the said wall over 10 to 60 % of its surface, the catalyst particles and the growing polymer powder being entrained by centrifugal force over at least a part of the spherical wall and falling in the central part of the spherical zone, thus ensuring powerful stirring which is uniform and free from dead zones.

2. Process according to Claim 1, characterized in that use is made of olefinic monomers which are in a gaseous form or of liquefiable monomers capable of being injected into the polymerization zone, the said monomers being capable of being used conjointly with inert gases and/or chain-regulating gases, such as hydrogen, affecting the transfer reactions.

3. Process according to either of Claims 1 or 2, characterized in that the operation is carried out at pressures which are lower than atmospheric pressure and range up to 506,625 $10^2$ Pa (500 atm) or higher, the preferred range being between 101,325 Pa and 8,106 $10^3$ Pa (1-80 atm) approximately.

4. Process according to any one of Claims 1 to 3, characterized in that the operation is carried out at temperatures below normal temperature and ranging up to 250 °C or higher, the preferred range being between normal temperature and 150 °C approximately.

5. Process according to any one of Claims 1 to 4, characterized in that, for homopolymerization reactions, the monomers used are ethylene or propylene, as well as olefins containing 3 to 18 carbon atoms and preferably 3 to 8 carbon atoms, including 1-butene, 1-pentene, 4-methyl-1-pentene, 1-heptene, 1-hexene, 1-octene and mixtures thereof, and, for copolymerization reactions, those which rely on the copolymerization of ethylene and propylene, as well as on the copolymerization of ethylene and/or of olefins containing 3 to 18 carbon atoms, which can be straight-chain or branched-chain, for example 1-butene, 1-pentene, 1-hexene, 4-methyl-1-pentene, 1-heptene, 1-octene, 1-nonene, 1-decene, 1-undecene, 1-dodecene, 1-tridecene, 1-tetradecene, 1-pentadecene, 1-hexadecene, 1-octadecene and mixtures thereof.

6. Process according to any one of Claims 1 to 5, characterized in that use is made of diolefins or conjugated diolefins, especially dienes such as butadiene, isoprene, 1,4-hexadiene, 1,5-hexadiene, vinylnorbornene, ethylidenenorbornene and dicyclopentadiene, as comonomers and especially ter-monomers.

7. Process according to any one of Claims 1 to 6, characterized in that use is made of a solid catalyst, in a granular or particulate form, of the supported Ziegler-Natta type, namely a catalyst comprising a compound of a transition metal such as Ti, V or Zr in contact with a magnesium compound, optionally in the presence of an organic electron-donor compound, the composition thus formed being capable of being distributed on a porous support of the metal oxide type, the catalytic compound which results from these combinations being used in the presence of a cocatalyst of the alkyl aluminium or aluminium alcoholate type.

8. Process according to any one of Claims 1 to 6, characterized in that use is made of a solid catalyst, in a granular or particulate form, of the supported chromium type, namely comprising at least one chromium compound distributed on a porous support based on a metal oxide, optionally in the presence of other compounds such as organic titanium compounds, if required in the presence of fluorinecontaining salts, the said chromium catalysts being, before being used in polymerization, activated under dry air at a high temperature and after a nitrogen purge, the chromium catalyst obtained being capable of being used as such or in the presence of catalysts of the alkyl aluminium or aluminium alcoholate type.

9. Process according to any one of Claims 1 to 8, characterized in that the stirring is produced by a turbine assembly whose profiled blades are very close to the spherical wall bounding the polymerization zone, separations of 1 to 50 millimetres being preferred.

10. Process according to any one of Claims 1 to 9, characterized in that the turbine assembly has blades (T1, T2, T3, T4, 29) of such length that the diameter of the circle described by their ends is at least equal to one third of the diameter of the sphere.

11. Process according to any one of Claims 1 to 10, characterized in that the blades of the turbine assembly skim the spherical wall until an equatorial plane is attained, in which case the diameter of the circle generated by their ends does not exceed the diameter of the sphere, to within the thickness of the clearances, the blades even being capable of going beyond the equatorial plane (E-E) normal to the axis of rotation.

12. Process according to any one of Claims 1 to 11, characterized in that the turbine assembly comprises from two to eight blades and preferably three blades distributed symmetrically relative to the axis of stirring and shaped so as to ensure powerful stirring.

13. Process according to any one of Claims 1 to 12, characterized in that the additional stirring is produced in the part of the spherical polymerization zone which is not occupied by the turbine assembly, by means of an additional scraper system (30, 31) consisting of several members, preferably ribbon-shaped blades (30), having a symmetry of revolution and profiled so as not to interfere with the progress of the gases.

14. Process according to any one of Claims 1 to 12, characterized in that additional stirring is produced in the part of the spherical polymerization zone which is not occupied by the turbine assembly, by means of one or more turbine disintegrators enabling any agglomerates which may be present to be removed.

15. Process according to any one of Claims 1 to 14, characterized in that the temperature in the polymerization zone is controlled externally by producing the spherical wall in the form of a jacket through which a controlling fluid is circulated, and/or internally within the polymerization zone by injecting therein a cooled gas, a compressed fluid which cools by decompression, or a liquid which vaporizes under the conditions prevailing within the polymerization zone.

16. Process according to any one of Claims 1 to 15, characterized in that the polymerization, homopolymerization and interpolymerization reactions are conducted until a dry polymer powder is obtained.

17. Process according to any one of Claims 1 to 16, characterized in that the polymerization is conducted with a view to controlling the particle size distribution of the catalyst and obtaining a prepolymer capable of being used in a subsequent polymerization stage.

18. Process according to any one of Claims 1 to 16, characterized in that the polymerization is conducted with a view to controlling the particle size distribution of the catalyst and in that a subsequent polymerization stage is effected in a gaseous phase, in a fluidized or stirred bed.

19. Reactor for gaseous phase polymerization with heterogeneous catalysis, comprising essentially means (A, 22, 23) for introducing the monomer(s) to be polymerized, means for stirring the solid particulate catalyst and the polymer being formed, means for controlling the temperature and means (P 17, 20) for withdrawing the polymer obtained, the said reactor being characterized in that it is essentially spherical in shape, and in that the means for stirring comprise essentially a turbine assembly (T1, T2, T3, T4, 29) with profiled blades driven in rotation, the said blades skimming the inner wall of the reactor over 10 to 60 % of its surface.

20. Reactor according to Claim 19, characterized in that the profiled blades of the turbine assembly are very close to the inner wall of the reactor, gaps of 1 to 50 millimetres being preferred between the blades and the wall.

21. Reactor according to either of Claims 19 or 20, characterized in that the turbine assembly has blades (T1, T2, T3, T4, 29) of a length such that the diameter of the circle described by their ends is at least equal to one third of the diameter of the sphere.

22. Reactor according to any one of Claims 19 to 21, characterized in that the blades of the turbine assembly skim the spherical wall until an equatorial plane is attained, in which case the diameter of the circle generated by their ends does not exceed the diameter of the sphere, to within the thickness of the clearances, the blades even being capable of going beyond the equatorial plane (E-E) normal to the axis of rotation.

23. Reactor according to any one of Claims 19 to 22, characterized in that the turbine assembly comprises from two to eight blades and preferably three blades, distributed symmetrically relative to the axis of stirring, and shaped so as to ensure powerful stirring.

24. Reactor according to any one of Claims 19 to 23, characterized in that the means of stirring comprise, in addition to the turbine assembly, an additional scraper system (30, 31) consisting of several members, preferably ribbon-shaped blades (30) driven in rotation and profiled so as not to interfere with the progress of the gases.

25. Reactor according to any one of Claims 19 to 24, characterized in that the means of stirring comprise, in addition to the turbine assembly, one or more turbines (T') called disintegrators and located in the zone situated above the circle generated by the end of the blades of the main turbine.

26. Reactor according to any one of Claims 19 to 25, characterized in that the turbine assembly is installed in the lower part of the reactor.

27. Reactor according to any one of Claims 19 to 26, characterized in that, when it is present, the additional scraper system is housed in the upper part of the spherical reactor.

28. Reactor according to any one of Claims 19 to 27, characterized in that it comprises means for introducing renewed quantities of Catalyst, in particular by means of a gas-lock system under an inert gas blanket.

29. Olefin prepolymers, homopolymers and copolymers obtained by the process according to any one of Claims 1 to 17 or in the reactor according to any one of Claims 19 to 28, in the form of dry, homogeneous and agglomerate-free powder.

## Patentansprüche

1. Polymerisationsverfahren in der Gasphase mit heterogener Katalyse durch Inkontaktbringen wenigstens eines olefinischen Monomeren, das unter Reaktionsbedingungen gasförmig ist, mit einem Festkatalysator, in einer gerührten Polymerisationszone, wobei das Verfahren dadurch gekennzeichnet ist, daß man eine Polymerisationszone (Z1, Z2, Z3, Z4) benutzt, die von einer sphärischen Innenwand (S1, S2, S3, S4) begrenzt ist, und das Rühren mit Hilfe eines Turbinenmischers (T1, T2, T3, T4) mit Schaufeln, die in Rotation gehalten werden, durchführt, wobei die Schaufeln ca. 10 bis 60 % der Oberfläche der Innenwand bestreichen, und die Katalysatorteilchen sowie das sich bildende Polymerpulver, durch die Zentrifugalkraft an mindestens einen Teil der sphärischen Innenwand gedrückt werden und dann in das Zentrum des sphärischen Reaktors zurückfallen, und wobei eine heftige Durchmischung und Abschabung, die gleichmäßig und ohne tote Zonen erfolgt, gewährleistet wird.

2. Verfahren nach Anspruch 1, dadurch gekennzeichnet, daß man olefinische Monomere in Gasform oder als verflüssigbar Monomere verwendet, die in die Polymerisationszone eingespritzt werden können, wobei die Monomere zusammen mit Inertgasen und/oder Gasen, die die Kettenlänge regeln, verwendet werden können, wie Wasserstoff, indem sie auf Transferreaktionen einwirken.

3. Verfahren gemäß einem der Ansprüche 1 oder 2, dadurch gekennzeichnet, daß man bei Drücken unterhalb des Atmosphärendrucks bis zu Drücken von $506\,625 \cdot 10^2\,Pa$ (500 atm) oder mehr arbeitet, insbesondere im Druckbereich zwischen $101\,325\,Pa$ und etwa $8\,106 \cdot 10^3\,Pa$ (1 bis 80 atm).

4. Verfahren gemäß irgendeinem der Ansprüche 1 bis 3, dadurch gekennzeichnet, daß man bei Temperaturen von unter Normaltemperatur bis zu Temperaturen von 250 °C oder mehr arbeitet, vorzugsweise im Temperaturbereich von Normaltemperatur bis ungefähr 150 °C.

5. Verfahren gemäß irgendeinem der Ansprüche 1 bis 4, dadurch gekennzeichnet, daß man als Monomere für die Homopolymerisation Ethylen oder Propylen sowie Olefine mit 3 bis 18 C-Atomen, insbesondere 3 bis 8 C-Atomen verwendet, beispielsweise Buten-1, Penten-1, Methyl-4-penten-1, Hepten-1, Hexen-1, Octen-1 und ihre Gemische und für die Copolymerisation diejenigen Monomeren verwendet, die bei der Copolymerisation von Etylen und Propylen, sowie bei der Copolymerisation von Ethylen und/oder Olefinen mit 3 bis 18 C-Atomen, die linear oder verzweigt sein können, beispielsweise Buten-1, Penten-1, Hexen-1, Methyl-4-penten-1, Hepten-1, Octen-1, Nonen-1, Decen-1, Undecen-1, Dodecen-1, Tridecen-1, Tetradecen-1, Pentadecen-1, Hexadecen-1, Heptadecen-1, Octadecen-1 und Mischungen hieraus verwendet werden.

6. Verfahren nach irgendeinem der Ansprüche 1 bis 5, dadurch gekennzeichnet, daß man Diolefine oder konjugierte Diolefine als Co-Monomere und insbesondere als Ter-Monomere verwendet, insbesondere Butadien, Isopren, Hexadien-1,4, Hexadien-1,5, Vinylnorbornen, Etylidennorbornen und Dicyclopentadien.

7. Verfahren gemäß irgendeinem der Ansprüche 1 bis 6, dadurch gekennzeichnet, daß man einen Feststoffkatalysator benutzt, der als Granulat oder insbesondere als Ziegler-Natta-Träger-Katalysator vorliegt, nämlich ein Katalysator, der eine Übergangsmetallverbindung wie Ti, V oder Zr in Kontakt mit einer Magnesiumverbindung, gegebenenfalls in Gegenwart einer organischen Elektronendonorverbindung, umfaßt, wobei die so zusammengesetzte Mischung auf einen porösen Metalloxidträger aufgegeben werden kann und die so zusammengestellte Katalysatormischung dann in Gegenwart eines Co-Katalysators vom Typ einer Alkylaluminiumverbindung oder eines Aluminiumalkoholats verwendet werden kann.

8. Verfahren nach irgendeinem der Ansprüche 1 bis 6, dadurch gekennzeichnet, daß man einen Feststoffkatalysator vom Typ Chrom-auf-einem-Träger verwendet, der als Granulat oder in Teilchenform vorliegt, wobei er wenigstens eine Chromverbindung enthält, die auf das poröse Trägermaterial eines Metalloxids aufgebracht wird, gegebenenfalls in Gegenwart von anderen Verbindungen, wie titanorganischen Verbindungen, gegebenenfalls in Gegenwart von Fluorsalzen, wobei der Chromkatalysator vor seinem Einsatz in der Polymerisation durch trockene Luft bei hoher Temperatur und nachträgliche Spülung mit Stickstoff aktiviert wird, und der Chromkatalysator entweder direkt oder in Gegenwart eines Katalysators vom Typ einer Alkylaluminiumverbindung oder eines Aluminiumalkoholats verwendet werden kann.

9. Verfahren gemäß irgendeinem der Ansprüche 1 bis 8, dadurch gekennzeichnet, daß das Rühren durch einen Turbinenmischer bewirkt wird, dessen geformte Schaufeln sehr nahe an der sphärischen Innenwand, die die Polymerisationszone begrenzt, sind, wobei Abstände von 1 bis 50 mm bevorzugt sind.

10. Verfahren nach irgendeinem der Ansprüche 1 bis 9, dadurch gekennzeichnet, daß die Schaufeln (T1, T2, T3, T4, 29) des Turbinenmischers in einer solchen Länge angeordnet sind, daß der Kreisdurchmesser, der von ihren Extremitäten durchlaufen wird, mindestens ein Drittel des Durchmessers des sphärischen Körpers ausmacht.

11. Verfahren gemäß irgendeinem der Ansprüche 1 bis 10, dadurch gekennzeichnet, daß die Schaufeln des Turbinenmischers dis sphärische Innenwand berühren, bis sie eine äquatoriale Ebene erreichen, wobei der Kreisdurchmesser, der von ihren Extremitäten verursacht wird, gleich dem maximalen Durchmesser des sphärischen Körpers ist, und unter Berücksichtigung des Spiels sie Schaufeln selbst die äquatoriale (E-E) Ebene der Rotationsachse überschreiten können.

12. Verfahren nach irgendeinem der Ansprüche 1 bis 11, dadurch gekennzeichnet, daß der Turbinenmischer zwei bis acht, vorzugsweise drei Schaufeln aufweist, die symmetrisch in Bezug auf die Antriebsachse verteilt und derartig geformt sind, daß sie ein wirksames Durchmischen und Abschaben bewirken.

13. Verfahren nach irgendeinem der Ansprüche 1 bis 12, dadurch gekennzeichnet, daß man eine zusätzliche Durchmischung in dem Teil der sphärischen Polymerisationszone erhält, die nicht von dem Turbinenmischer erreicht wird, indem man sich eines Systems von zusatzlichen Abstreifern (30, 31) bedient, die aus mehreren Teilen bestehen, vorzugsweise fadenförmigen Teilen (30), die symmetrisch umlaufen und derart geformt sind, daß sie den Gasfluß nicht behindern.

14. Verfahren nach irgendeinem der Ansprüche 1 bis 12, dadurch gekennzeichnet, daß man eine zusätzliche Durchmischung in dem Teil der sphärischen Polymerisationszone, der nicht von dem Turbinenmischer erreicht wird, mit Hilfe einer oder mehrerer « Zerreißungsturbinen » erreicht, die eine Entfernung der entstandenen Agglomerate erlauben.

15. Verfahren gemäß irgendeinem der Ansprüche 1 bis 14, dadurch gekennzeichnet, daß man die Temperatur in der Polymerisationszone vau außen her regelt, indem man die sphärische Innenseite mit einem Mantel versieht, durch den eine Wärmeaustauscherflüssigkeit fließt und/oder von innen her regelt, indem man in die Polymerisationszone ein abgekühltes Gas, eine Komprimierte Flüssigkeit, die sich durch Entspannung abkühlt, oder eine Flüssigkeit, die unter den Bedingungen, die im Inneren der Polymerisationszone herrschen, verdampft, einspritzt.

16. Verfahren gemäß irgendeinem der Ansprüche 1 bis 15, dadurch gekennzeichnet, daß man die Prä-, die Homo- und die Interpolymerisationsreaktion so lange ausführt, bis man ein trockenes Pulver des Polymeren erhält.

17. Verfahren gemäß irgendeinem der Ansprüche 1 bis 16, dadurch gekennzeichnet, daß man die Polymerisation so durchführt, daß man den Kornaufbau des Katalysators regelt und so ein geeignetes Präpolymeres erhält, das in einer späteren Stufe der Polymerisation verwendet wird.

18. Verfahren gemäß irgendeinem der Ansprüche 1 bis 16, dadurch gekennzeichnet, daß man die Polymerisation so durchführt, daß man den Kornaufbau des Katalysators regelt, und daß man die letzte Stufe der Polymerisation in der Gasphase, im Wirbelbett oder durchgemischten Bett ausführt.

19. Reaktor zur Polymerisation in der Gasphase mit heterogener Katalyse, enthaltend im wesentlichen Mittel (A, 22, 23) zur Einführung von einem oder mehreren zu polymerisierenden Monomeren, Mittel zur Bewegung der festen Katalysatorteilchen sowie des gebildeten Polymeren, Mittel zum Regeln des Temperatur, und Mittel (P, 17, 20) zum Austragen des erhaltenen Polymeren, dadurch gekennzeichnet, daß der Reaktor eine im wesentlichen sphärische Gestalt besitzt und die Rührwerkmittel im wesentlichen aus einem Turbinenmischer (T1, T2, T3, T4, 29) mit geformten Schaufeln, die in Bewegung sind, bestehen, wobei die Schaufeln zwischen 10 bis 60 % der Oberfläche der Innenwand des Reaktors bestreichen.

20. Reaktor gemäß Anspruch 19, dadurch gekennzeichnet, daß die geformten Schaufeln des Turbinenmischers sich sehr nahe an der Innenwand des Reaktors entlang bewegen, mit einem bevorzugten Abstand von 1 bis 50 mm zwischen Schaufeln und Innenwand.

21. Reaktor gemäß Anspruch 19 oder 20, dadurch gekennzeichnet, daß die Schaufeln (T1, T2, T3, T4, 29) des Turbinenmischers hinsichtlich der Länge, die sie durch den Kreisdurchmesser ihrer Extremitäten bilden, wenigstens ein Drittel des Durchmessers des sphärischen Körpers ausmachen.

22. Reaktor gemäß irgendeinem der Ansprüche 19 bis 21, dadurch gekennzeichnet, daß die Schaufeln des Turbinenmischers die sphärische Innenwand überstreichen, bis sie fast die äquatoriale Ebene erreichen, wobei in diesem Falle der Kreisdurchmesser, der von ihren Extremitäten gebildet wird, gleich dem maximalen Durchmesser des sphärischen Körpers ist, und unter Berücksichtigung des Spiels können die Schaufeln sogar die äquatoriale Ebene (E-E) der Rotationsachse überschreiten.

23. Reaktor gemäß irgendeinem der Ansprüche 19 bis 22, dadurch gekennzeichnet, daß der Turbinenmischer zwei bis acht, vorzugsweise drei Schaufeln aufweist, die symmetrisch in Bezug auf die Antriebsache angeordnet und derart geformt sind, daß sie eine heftige Durchmischung zulassen.

24. Reaktor gemäß irgendeinem der Ansprüche 19 bis 23, dadurch gekennzeichnet, daß die Rührmittel zusätzlich zu dem Turbinenmischer weitere Abstreifer (30, 31) enthalten, die aus mehreren Teilen bestehen, vorzugsweise fadenförmigen Teilen (30), die rotieren und derart geformt sind, daß sie den Gasfluß nicht behindern.

25. Reaktor gemäß irgendeinem der Ansprüche 19 bis 24, dadurch gekennzeichnet, daß die Rührmittel zusätzlich zu dem Turbinenmischer eine oder mehrere Turbinen (T'), die sogenannten Zerreißer, umfassen, die sich in dem Bereich befinden, der außerhalb des Kreises liegt, der durch die Extremitäten der Schaufeln des Hauptturbinenmischers umrissen wird.

26. Reaktor gemäß irgendeinem der Ansprüche 19 bis 25, dadurch gekennzeichnet, daß sich der Turbinenmischer im unteren Teil des Reaktors befindet.

27. Reaktor gemäß irgendeinem der Ansprüche 19 bis 26, dadurch gekennzeichnet, daß, falls vorhanden, das zusätzliche Abstreifsystem sich im oberen Teil des Reaktors befindet.

28. Reaktor gemäß irgendeinem der Ansprüche 19 bis 27, dadurch gekennzeichnet, daß dieser Mittel zum Einführen von erneuerten Katalysatormengen aufweist, insbesondere durch ein Schleusensystem unter Inertgas.

29. Präpolymere, Homopolymere und Copolymere von Olefinen, erhalten nach Verfahren gemäß irgendeinem der Ansprüche 1 bis 17 oder in einem Reaktor gemäß irgendeinem der Ansprüche 19 bis 28, in Form eines trockenen Pulvers homogen und ohne Zusammenballung.

FIG.1a

FIG.1b

FIG.1c

FIG.1d

1

FIG.1e

FIG.1f

FIG.2

FIG.3

FIG.4